# EUROPÄISCHE PATENTANMELDUNG

(11) **EP 1 172 575 A2**
(43) Veröffentlichungstag der Anmeldung: **16.01.2002**
(21) Anmeldenummer: 01114074.6
(22) Anmeldetag: 09.06.2001
(51) Int. Cl.: F16C 32/04, F16C 39/06

(54) **Zentrifuge mit einem zur Aufnahme von Zentrifugiergut vorgesehenen Rotor**

(30) Priorität: 13.07.2000 DE 10034204; 25.04.2001 DE 10120623
(71) Anmelder: KENDRO Laboratory Products GmbH, 63450 Hanau (DE)
(72) Erfinder: Betke, Viktor, 30655 Hannover (DE); Jaeckel, Ingo, Dr., 37534 Badenhausen (DE); Kopp, Dietmar, 37574 Einbeck (DE); Flögel-Delor, Uta, 04860 Pflückuff/OT Losswig (DE); Werfel, Frank, Dr., 04277 Leipzig (DE)
(74) Vertreter: Lang, Friedrich

(57) **Zusammenfassung**

Eine Zentrifuge mit einer zur Aufnahme von Zentrifugiergut vorgesehenen Rotoranordnung weist wenigstens ein Magnetlager auf; die Rotoranordnung ist mit wenigstens einer Permanentmagnet-Konfiguration versehen, welche in radialer Richtung gesehen in einem vorgegebenen Abstand zu einem passiven supraleitenden Magnet-Stator benachbart angeordnet ist. Dabei treten magnetische Feldlinien aus der Permanentmagnetkonfiguration wenigstens näherungsweise senkrecht in die benachbarte Oberfläche des Magnet-Stators ein.

Weiterhin ist eine Antriebsvorrichtung für die Rotor-Anordnung vorgesehen, wobei der Antriebsmotor vorzugsweise als Induktionsmaschine ausgebildet ist, so dass die gesamte Rotor-anordnung berührungsfrei gelagert ist. Der Magnet-Stator weist einen schmelztexturiertes YBaCuO-Supraleiter-Werkstoff auf, wobei der Werkstoff unterhalb einer Temperatur von T = 92 K mit Hilfe einer im Zentrifugengehäuse integrierten Kühleinheit supraleitend wird. Der Stator ist vorzugsweise als supraleitender Zylinder oder Hohlzylinder ausgebildet.

## Beschreibung

Die Erfindung betrifft eine Zentrifuge mit einer zur Aufnahme von Zentrifugiergut vorgesehenen Rotoranordnung, die wenigstens ein Lager aufweist und mittels einer Antriebsvorrichtung um eine Rotor-Achse drehbar angeordnet ist, wobei auf wenigstens einen Teil der Rotoranordnung magnetische Kräfte einwirken.

Die Rotoranordnung besteht in der Praxis aus einem Rotorkopf, welcher das Zentrifugiergut aufnimmt, und aus einem Rotor-Teil zur Bildung eines Lagers, das beispielsweise als wellen- oder hohlwellenförmiges Teil ausgebildet ist und zu einem supraleitenden Magnet-Stator benachbart angeordnet ist.

Aus der DT 23 14 436 A1 ist eine Lagerungs- und Dämpfungseinrichtung zur Stabilisierung der Rotorbewegung schnell umlaufender Zentrifugen bekannt, die ohne eine mechanische Verbindung zwischen Rotor und Umgebung zu erfordern, den Rotor bei Abweichungen von der gewünschten Rotations-Achse in diese zurückführt. Dabei werden statische Rückführkräfte zwischen Rotor und Umgebung durch ein Magnetsystem und mindestens eine Dämpfungseinrichtung erzeugt, wobei die erforderliche Dämpfung nicht allein über Magnetkräfte sondern teilweise oder vollständig auch über mechanische hydraulische bzw. hydropneumatische Kräfte auf den Rotor erfolgt.

Als problematisch erweist es sich, dass die Dämpfungseinrichtungen nicht allein über Magnetkräfte sondern auch über mechanische und hydraulische bzw. hydropneumatische Kräfte an den Rotor angekoppelt werden, so dass mit einem verhältnismäßig hohen technischen Aufwand zu rechnen ist.

Weiterhin ist aus der US 51 96 748 eine Laminatstruktur für ein supraleitendes Lager bekannt, bei dem wenigstens zwei Magnete mit gegenläufiger Polarität auf einer Achse zusammengesteckt sind, wobei aufgrund eines hohen Flussdichtegradienten eine hohe Steifigkeit erzielt wird. Die Struktur ist innerhalb eines Hohlzylinders aus supraleitendem Werkstoff untergebracht.

Weiterhin ist aus der DE 42 32 869 A1 eine supraleitende Lagereinheit und ein Verfahren zu ihrem Betrieb bekannt, wobei die Lagereinheit einen auf einer Drehwelle befestigten Permanentmagneten aufweist und ein supraleitender Körper an ihrem Umfang eines Gehäuses befestigt ist, der den Permanentmagneten umgibt. Der supraleitende Körper ist so gestaltet, dass er bei aufwärts bewegter Drehwelle so lange gekühlt werden kann, bis er einen supraleitenden Zustand erreicht, so dass die Drehwelle während des Betriebes in einem Gleichgewichtszustand zwischen ihrem Gewicht und den anhängenden Teilen und einer aufgrund des Pinning Effektes auftretenden Kraft gehalten wird, die durch den Permanentmagneten und den supraleitenden Körper hervorgerufen wird.

Als problematisch erweist sich die verhältnismäßig komplizierte Inbetriebnahme, wobei die Drehwelle zunächst so angehoben werden muss, dass die Oberseite des Permanentmagneten mit der Unterseite des zur Supraleitung vorgesehenen Körpers in Berührung geht. Anschließend wird ein Kühlmittel zugeführt, so dass der Körper supraleitend wird. Es handelt sich somit um eine verhältnismäßig aufwändige Inbetriebnahme der beschriebenen Anordnung.

Aufgabe der Erfindung ist es, eine Zentrifuge zu schaffen, bei der der Rotor während des Zentrifugierens magnetisch beabstandet in ein oder zwei supraleitenden Magnetlagern berührungslos und reibungslos rotiert. Weiterhin soll der bei einer aktiven Regelung hohe technische Aufwand durch Einsatz von passiven supraleitenden Magnetlagern möglichst gering gehalten werden.

Darüber hinaus sollen bei Drehzahlen bis zu 180.000 U/min hohe Lagersteifigkeiten, gute Dämpfungseigenschaften, ein vibrationsarmer Lauf, geringe Antriebsleistung sowie eine günstige Unwuchttoleranz erzielt werden. Die Dämpfung soll frequenzunabhängig sein.

Die Aufgabe wird dadurch gelöst, dass die Rotoranordnung wenigstens eine Permanentmagnet-Konfiguration aufweist, welche in einem vorgegebenen Abstand zu wenigstens einem passiven supraleitenden Magnet-Stator benachbart angeordnet ist, wobei die Permanentmagnet-konfiguration und der Magnet-Stator wenigstens ein Magnetlager bilden.

Als besonders vorteilhaft erweist es sich, dass auf eine verhältnismäßig aufwendige aktive Regelung der Lagerung verzichtet werden kann; darüber hinaus lässt die Lagerung eine verhältnismäßig robusten Betrieb in Labor und Fertigung zu.

Vorteilhafte Ausgestaltungen der Zentrifuge sind in den Ansprüchen 2 bis 25 angegeben.

In einer bevorzugten Ausgestaltung der Erfindung treten aus der Permanentkonfiguration austretende Feldlinien wenigstens näherungsweise senkrecht in wenigstens eine benachbarte Oberfläche eines Magnet-Stators ein.

In einer vorteilhaften Ausgestaltung der Erfindung schließt die Rotor-Achse bezogen auf eine horizontale Ebene einen Winkel im Bereich von 0 bis 90° ein.

In einer bevorzugten Ausgestaltung der Erfindung weist die Rotoranordnung wenigstens eine ring- oder zylinderförmige Permanentmagnetkonfiguration auf, die in radialer Richtung gesehen zu wenigstens einem passiven, supraleitenden Magnet-Stator benachbart angeordnet ist.

In einer ersten vorteilhaften Ausführungsform der Erfindung umgibt der Magnet-Stator wenigstens teilweise die Permanentmagnetkonfiguration der Rotoranordnung.

In einer zweiten vorteilhaften Ausgestaltung umgibt die Permanentmagnetkonfiguration der Rotoranordnung den Magnet-Stator.

Die Rotoranordnung weist vorzugsweise wenigstens eine Permanentmagnetkonfiguration auf, die in axialer Richtung gesehen zu wenigstens einem passiven supraleitenden Magnet-Stator benachbart ist; dabei ist in einer vorteilhaften Ausgestaltung die Permanentmagnetkonfiguration auf einem entlang der Rotorachse verlaufenden, wellenförmigen Teil befestigt oder als Teil der Rotoranordnung entlang der Rotorachse ausgebildet, wobei bei mehreren Magnetlagern wenigstens ein Stator das wellenförmige Teil wenigstens teilweise umgibt.

In einer weiteren vorteilhaften Ausgestaltung der Zentrifuge ist die Permanentmagnetkonfiguration in einem hohlwellenförmigen Teil der Rotoranordnung befestigt oder als hohlwellenförmiger Teil der Rotoranordnung ausgebildet, wobei bei mehreren Magnetlagern das hohlwellenförmige Teil wenigstens einen Stator umgibt.

Darüber hinaus ist auch eine Kombination möglich, bei der die Rotoranordnung wenigstens eine Permanentkonfiguration aufweist, die in radialer Richtung gesehen zu einem Magnet-Stator benachbart angeordnet ist und wenigstens eine Permanentkonfiguration aufweist, die in axialer Richtung gesehen zu wenigstens einem Magnet-Stator benachbart angeordnet ist.

In einer bevorzugten Ausgestaltung ist der Stator der Zentrifuge mit einer angeschlossenen Kühleinheit versehen; dabei ist der Stator von der Antriebswelle aus gesehen wenigstens zum Teil als Hohl-Zylinder ausgebildet. Vorzugsweise weist der Stator einen monolithischen Hohl-Zylinder aus schmelztexturiertem YBaCuO-Supraleiter-Werkstoff auf, wobei dieser Werkstoff unterhalb einer Temperatur von von 92 K bzw. -181°C supraleitend wird. Der Stator weist zudem polykristallines schmelztexturiertes Vieldomänenmaterial zur Erzeugung von Dämpfungseigenschaften des Magnetlagers auf.

In einer vorteilhaften Ausführungsform weist der Stator Dämpfungsringe aus Kupfer, Aluminium oder deren Basislegierungen auf; dabei ist es möglich, die Dämpfungsringe zwischen den Supraleitern eines Stators anzuordnen oder in die Supraleiter einzulassen.

Der Stator ist vorzugsweise direkt an eine im Zentrifugengehäuse integrierte Kühlmaschine zwecks Kühlung des Supraleiters unter seine kritische Sprungtemperatur angeschlossen. Es ist jedoch auch möglich, die zur Supraleitung erforderliche Temperatur durch Verdampfung einer Flüssigkeit mit niedrigem Siedepunkt - beispielsweise durch Verdampfung von flüssigem Stickstoff bei -196°C - zu erzeugen.

In einer vorteilhaften Ausgestaltung ist der supraleitende Stator von der Rotorachse aus gesehen wenigstens zum Teil als Hohl-Zylinder oder Ring ausgebildet, wobei der wenigstens eine Stator wenigstens eine Segment- oder Sektor-Öffnung aufweist.

Die Permanentmagnetkonfiguration ist vorzugsweise ring- oder zylinderförmig ausgebildet und koaxial zur Rotor-Achse angeordnet.

Vorteilhafterweise ist die Permanentmagnetkonfiguration als ein ring- oder zylinderförmiger Permanentmagnet oder eine Gruppe aus koaxialen Ringen oder Hohlzylindern ausgebildet, die direkt oder mit einem anderen Material als Zwischenlage radial ineinander und/oder axial aneinander gefügt sind.

In einer weiteren vorteilhaften Ausgestaltung der Zentrifuge ist die Permanentmagnetkonfiguration aus axial magnetisierten Ringen aufgebaut, die in axialer Richtung gestapelt sind, wobei gleiche Pole aufeinander liegen und eine hohe lokale Flussdichte in radialer Richtung erzeugen.

Darüber hinaus ist in einer weiteren Ausgestaltung der Zentrifuge vorgesehen, dass die Permanentkonfiguration wenigstens zwei ringförmige Permanentmagnete aufweist, die konzentrisch in einer Ebene angeordnet sind, wobei der Innen-Umfang eines äußeren Ringes den Außen-Umfang eines inneren Ringes berührt, dabei können die ineinander gefügten Permanentmagnetringe in radialer Richtung gesehen eine gleiche oder alternierende axiale Magnetisierung aufweisen.

In einer zweckmäßigen Ausgestaltung ist die Permanentkonfiguration als Unterteil eines Rotorbechers ausgebildet.

Die Permanentmagnetkonfiguration kann auch nur aus einem einzigen ring- oder zylinderförmigen Permanentmagneten bestehen.

In einer weiteren bevorzugten Ausgestaltung weist der Stator wenigstens einen zylindrischen Aluminium- oder Kupfer-Finger mit aufgesetztem Hohl-Zylinder aus Supraleiter-Werkstoff auf, wodurch die Antriebswelle mit ihren innenliegenden Permanentmagneten Magneten magnetisch stabil getragen wird.

In einer ersten bevorzugten Ausgestaltung der Zentrifuge weist der Rotor ein Rotor-Gehäuse auf, das an einem oberen Ende einer Antriebswelle mit vertikaler Rotations-Achse angeordnet ist, wobei die Antriebswelle wenigstens ein Paar axial angeordneter ring- oder zylinderförmiger Permanentmagnete enthält. Die Permanentmagnete sind vorzugsweise entlang der Rotations-Achse im Abstand zueinander angeordnet, wobei diese in radialer Richtung gesehen von wenigstens einem passiven supraleitenden Magnetlager als Stator umgeben sind.

In einer bevorzugten Ausgestaltung ist die Antriebswelle für den Rotor als Hohlwelle aus einem Werkstoff, vorzugsweise aus einem Werkstoff hoher Zugfestigkeit wie beispielsweise Legierungen auf der Basis von Aluminium, Titan, Stahl oder Kohlefaser gebildet, wobei ein Verhältnis von Zugfestigkeit zu Dichte im Bereich von 10⁶ Pa cm³/g bis 3 x 10⁹ Pa cm³/g vorgesehen ist.

Die Antriebswelle ist in dieser Ausführungsform vorzugsweise mit Permanentmagneten versehen, die eine radiale Flussverteilung erzeugen und entweder in Gruppen axial geschichtet mit Fluss-Sammlern angeordnet sind oder radial magnetisierte Ringe aufweisen.

In einer bevorzugten Ausgestaltung dient die Permanentmagnet-Konfiguration gleichzeitig als Lagerkomponente und als Antrieb des Rotors durch einen äußeren Stator.

Es ist jedoch auch möglich, eine berührungsfreie Antriebsvorrichtung auf der Basis einer Induktionsmaschine einzusetzen.

In einer weiteren vorteilhaften Ausgestaltung weist der Stator Kryomagnetlager auf, in denen Kupferdämpfungsringe zwischen Supraleiter-Zylindern den sich drehenden Permanentmagneten gegenüberstehen, wobei über drehzahlabhängige Wirbelströme eine zusätzliche Lagerdämpfung sowohl durch die Cu-Ringe als auch die HTS-Nachbarbereiche infolge Erwärmung erzeugt wird. Die Breite des Spalts zwischen den ringförmigen Permanentmagneten der Rotorantriebswelle und dem Stator liegt im Bereich von 1 bis 5 mm.

Die Antriebswelle für den Rotor besitzt an ihrem unteren Ende ein mechanisches Notlager, welches bei zu geringer Kraft der magnetischen Wirkung einen störungsfreien Anlauf bzw. Bremsvorgang der Antriebswelle bzw. des Rotors ermöglicht.

In einer weiteren bevorzugten Ausgestaltung der Erfindung ist das Rotor-Gehäuse an einem oberen Ende einer Antriebswelle mit vertikaler Rotor-Achse angeordnet, wobei die Antriebswelle wenigstens zwei ring- oder zylinderförmige Permanentmagnete aufweist, die in axialer Richtung gesehen im Abstand zu ebenfalls axial angeordneten passiven supraleitenden Magneten angeordnet sind; hier wird im Gegensatz zur ersten bevorzugten Ausgestaltung wird die magnetische Wirkung nicht mehr durch radial sondern durch axial wirkende Kräfte erzielt.

Dabei sind die passiven supraleitenden Magnete in einer praxisgerechten Ausführung zum Teil in Form eines Ringes oder Zylinders ausgebildet, wobei ein - ggf. verschließbarer - Spalt in jedem der supraleitenden Magneten vorgesehen ist, durch den die Antriebswelle zusammen mit den Permanentmagneten einführbar ist. Der Abstand der Permanentmagnete zueinander entspricht im Wesentlichen dem Abstand der supraleitenden Magneten, wobei der axiale Minimal-Abstand zwischen Permanentmagnet und supraleitendem Magneten im Bereich von 1 bis 5 mm liegt.

Als besonders vorteilhaft hat es sich erwiesen, das obere Lager durch Erweiterung des Abstandes zwischen Permanentmagnet und supraleitendem Magnet weicher zu gestalten, so dass selbst eine große Rest-Unwucht des Rotors (verglichen mit dem Stand der Technik) unproblematisch ist.

In einer dritten bevorzugten Ausgestaltung der Erfindung weist der Rotor an seinem zum Lager bzw. Antrieb gerichteten Ende einen Hohlzylinder auf, der an seiner Innenseite wenigstens einen ring- oder zylinderförmigen Permanentmagneten enthält, der wenigstens einen supraleitenden Magnet-Stator umgibt, der entlang der Rotor-Achse angeordnet ist. Der supraleitende Magnet ist mit einem Kühlfinger verbunden, der in einer bevorzugten Ausführungsform an eine Kühleinheit anschließbar ist. Der Hohlzylinder ist an seiner Außenseite mit einer metallischen Läuferstruktur eines Induktionsmotors als Antriebsmaschine versehen.

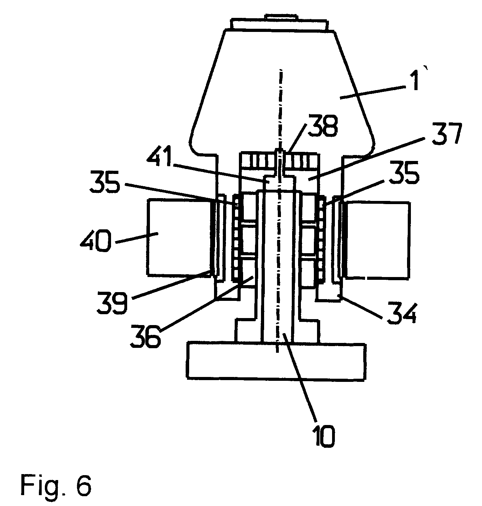

In einer bevorzugten Ausgestaltung der Erfindung gemäß Figur 6 weist der Kühlfinger einen entlang der Rotorachse nach oben verlaufenden Bolzen 41 aus einem Werkstoff hoher linearer Wärmeausdehnung - vorzugsweise aus Aluminium und Stahl - für das Notlager auf; durch die vom Supraleiter ausgehende Abkühlung zieht sich der Bolzen aus dem Notlager zurück, sobald der Supraleiter den Rotor magnetisch fixiert hat.

In einer bevorzugten vierten Ausführungsform der Erfindung weist der Rotor im unteren Gehäuseteil ringförmige Permanentmagnete auf, welche an ihrer Oberseite bzw. Unterseite jeweils mit gleichpoligen Permanentmagneten benachbart angeordnet sind. Die ringförmigen Permanent-magnete bilden somit mit dem Rotor eine bauliche Einheit. Unterhalb des Rotors ist axialsymmetrisch zu den ringförmigen Permanentmagneten ein ebenfalls weitgehend axial-symmetrischer supraleitender Magnet-Stator angeordnet, welcher auf seiner Oberseite eine ebene Fläche aufweist, die zur Rotorunterseite gerichtet ist. Die konzentrisch und koplanar angeordneten ringförmigen Permanentmagnete sind in axialer Richtung, d.h. parallel zur Rotor-Achse magnetisiert, wobei deren Feldlinien nahezu senkrecht in den darunter liegenden Magnet-Stator eintreten. Aufgrund des Supraleitereffekts des Magnet-Stators wird der Rotor mit Hilfe der ringförmigen Permanentmagnete im Abstand oberhalb des Magnet-Stators schwebend gehalten, so dass eine praktisch reibungslose Lagerung möglich ist.

Der Antrieb erfolgt hierbei ebenfalls berührungslos, beispielsweise durch Ausgestaltung des Rotor-Gehäuses als Läufer einer Induktionsmaschine.

In einer weiteren bevorzugten Ausführungsform der Erfindung weist das Rotor-Gehäuse an seiner Unterseite wenigstens zwei konzentrisch und koaxial angeordnete ringförmige Permanent-magnete auf, die auf ihrer Oberseite jeweils gegenpolig axial magnetisiert sind; dies bedeutet, dass sich die Magnetisierung in radialer Richtung gesehen jeweils an den Oberkanten bzw. Unterkanten der Permanentmagnet-Konfiguration ändert. Auch hier schwebt die als Permanentmagnet-Konfiguration ausgebildete Unterseite des Rotors oberhalb eines supraleitergekühlten Magnet-Stators, welcher eine ebene Oberfläche aufweist und vorzugsweise scheibenförmig ausgebildet ist.

Für flach gebaute Zentrifugen als Tischgeräte hat es sich als zweckmäßig erwiesen, eine Ausführungsform mit hoher Tragfähigkeit und Kippsteifigkeit des Rotors, die ansonsten nur mit einem beabstandeten Doppellager zu erreichen ist, einzusetzen. Dabei besteht der supraleitende Stator aus einem flachen YBCO-Ring von 100 bis 400 mm Durchmesser und einen oder mehreren flachen konzentrisch angeordneten innen oder außen laufenden Permanentmagnet-Ringen, die den Rotor tragen.

Im folgenden ist der Gegenstand der Erfindung anhand der Figuren 1 bis 7 näher erläutert.

Figur 1 zeigt dabei schematisch einen Rotor, der an einem Ende einer vertikal angeordneten Antriebswelle befestigt ist, die mit Hilfe von Permanentmagneten in zwei zueinander beabstandeten Magnetlagern geführt ist;

Figur 2 zeigt einen Querschnitt durch die Antriebswelle in ihrem unteren Lager, wobei auch ein Teil des supraleitenden Magnetlagers erkennbar ist.

Die Figuren 3a, 3b zeigen unterschiedliche Konfigurationen der Permanentmagnete auf der Antriebswelle, die in axialer Richtung gesehen mit und ohne Flusssammler in unterschiedlichen Abständen angeordnet sind.

Figur 4 zeigt schematisch ein zusätzliches Zentrifugenlager mit axialem und radialem Notlager für unwuchtige Rotoren.

Figur 5 stellt ein Zentrifugenlager mit seitlich herausnehmbarem Rotor dar, wobei in axialer Richtung gesehen alternierend Permanentmagnete und supraleitende Magnete angeordnet sind.

Figur 6 zeigt eine Zentrifuge mit äußeren Permanentmagneten, die einen supraleitenden Magneten umgeben.

Figur 7 stellt eine Anordnung mit einer im Bereich der Unterseite des Rotors befindlichen ringförmigen Anordnung von konzentrisch und koplanar angeordneten Permanentmagneten mit axialer Magnetisierung dar, die zusammen mit einem darunter befindlichen supraleitenden Magnet-Stator ein reibungsarmes Magnetlager bilden.

Figur 8 zeigt eine ähnliche Anordnung wie sie in Figur 7 dargestellt ist. Im Gegensatz dazu sind jedoch benachbarte Ring-Oberkanten bzw. Ring-Unterkanten jeweils gegenpolig ausgebildet.

Figur 9 zeigt schematisch eine gerätetechnische Ausgestaltung zur Magnetanordnung nach Figur 8.

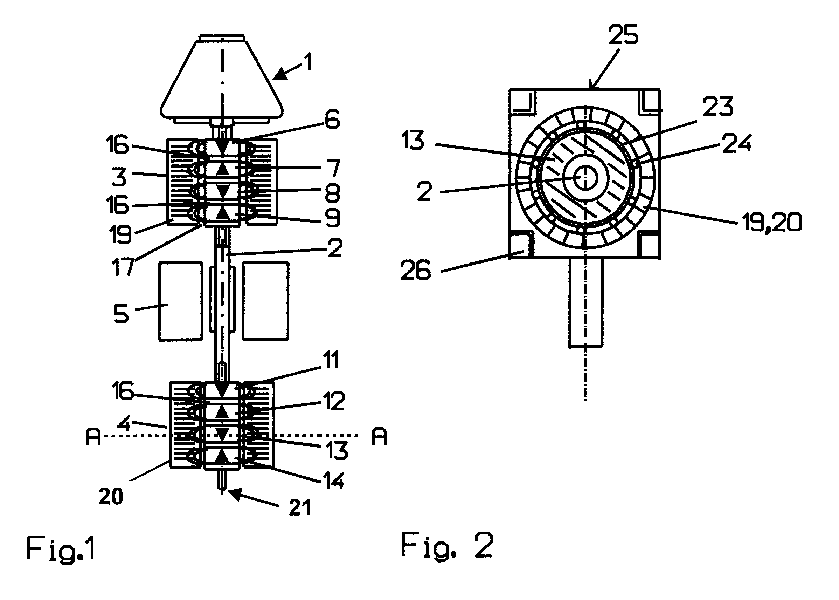

Gemäß Figur 1 ist der Rotor 1 am oberen Ende einer vertikal verlaufenden Antriebswelle 2 befestigt, wobei die Antriebswelle 2 in zwei axial zueinander beabstandeten Lagern 3 und 4 drehbar angeordnet ist. Zwischen den Lagern 3 und 4 ist eine Antriebsvorrichtung 5 vorgesehen.

Jedes der beiden Magnetlager 3, 4 besteht aus den auf der Antriebswelle 2 angeordneten ring- oder zylinderförmigen Permanentmagneten 6, 7, 8, 9 des Lagers 3, sowie 11, 12, 13, 14 des Lagers 4, wobei die Permanentmagnete in jedem der beiden Lager 3, 4 im vorgegebenen Abstand von wenigstens einem passiven supraleitenden Stator umgeben sind.

Zwischen den Permanentmagneten 6 und 7, 7 und 8, 8 und 9 sowie zwischen 11 und 12, 12 und 13, 13 und 14 ist jeweils eine hochpermeable Scheibe 16 zur Führung des Magnetflusses derart eingebaut, dass der zugeführte Fluss über den Spalt 17 zwischen Stator 19 und Rotor 1 senkrecht in die Wandung des Supraleiters eintritt. Die ringförmigen Permanentmagneten 6 bis 9 sowie 11 bis 14 bestehen aus SmCo oder NdFeB und erzeugen im Supraleiter eine stabile Rotorposition relativ zur Verschiebung in axialer oder radialer Richtung. Dagegen verursacht der in den supraleitenden Stator 19 verankerte radiale Magnetfluss bei Rotation um die Längsachse 21 nahezu keinen Widerstand. Die Permanentmagnete 6 bis 9 sowie 11 bis 14 sind wegen der bei hohen Drehzahlen auftretenden dynamischen Kräfte mit hochfester Kohlefaser und Prepregharzen armiert.

Vorteilhafterweise wird die YBCO-Hohlzylindertextur durch geschichtete Magnetkonfigurationen der Permanent-Magnete auf der Antriebswelle 2 in der Weise in die maximale Kraftentstehung eingebracht, wobei eine Kombination von gleich- und/oder gegenpolig angeordneten Magnetringen die absoluten Werte wie auch den Gradienten des Magnetflusses in radialer Richtung erhöhen.

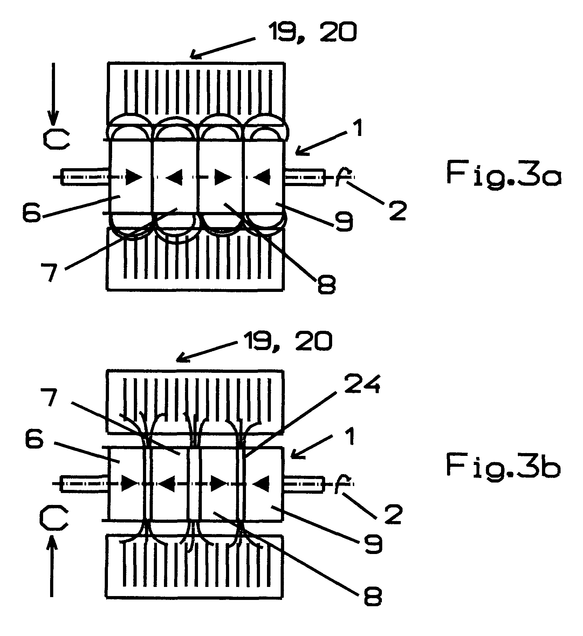

Anhand Figur 2 ist im Querschnitt zur Antriebsachse entlang einer durch Linie AA (Figur 1) angedeuteten Ebene der Aufbau von Magnetlager 4 erkennbar. Das Zentrifugenlager weist als Stator 20 einen Supraleiter auf, welcher zwecks guter thermischer Isolation sich in einen mittels Vakuum gegenüber der Außenumgebung evakuierten Gefäß 25 befindet; zur Abstützung ist die dem Rotor zugekehrte hohlzylindrische Innenwand 23 des Stators gegenüber dem Supraleiter durch Distanzhalter 24 mit geringer thermischer Leitfähigkeit abgestützt. Weiterhin sind im Gehäuse 25 des Stators 20 Aktivkohlebereiche 26 vorgesehen, die auf einen Kupferboden des Gehäuses 25 angeordnet und sind. Durch den Einsatz von Aktivkohle wird das Isolationsvakuum durch eine Kryopumpen-Wirkung beim Abkühlen erzeugt. Innerhalb des Stators 20 ist Antriebswelle 2 erkennbar, wobei einer der Permanentmagnete - beispielsweise Magnet 13 - im Querschnitt gezeigt ist. Die Antriebswelle ist als Hohlwelle konstruiert und läuft in den supraleitenden Ringen bzw. Zylindern des Stators 20.

Gemäß Figur 3a sind die Permanentmagnete 6 bis 9 bzw. Magnetlager 3, 4 ohne Abstand geschichtet zueinander benachbart angeordnet, wobei sich aufgrund der Führung der Feldlinien eine verhältnismäßig schwache Verankerung bei praktischen Werten des Luftspaltes von 52 mm im Supraleiter des Stators 19 ergibt. Nur im Nahbereich des Magnet-Stator-Supraleiters von ca. 20,5 mm ergibt die Anordnung hohe Kräfte. Erst durch eine geschichtete Anordnung der Permanentmagnete 6 bis 9 mit dazwischen liegenden Distanzhaltern 24 als hochpermeable Scheiben von jeweils 1 bis 2 mm Dicke zur Führung des Magnetflusses gemäß Figur 3b wird der Fluss bzw. werden die magnetischen Feldlinien über den Spalt zwischen Stator 19 und und den Permanentmagneten der Antriebswelle 2 senkrecht in die Supraleiterwandung eingeführt. Da durch Erhöhung und Führung des Magnetflusses auf der Seite der Permanentmagnete und der radialen Ausrichtung von stromtragenden kristallographischen A-B-Ebenen des Supraleiters eine hochstabile magnetische Wechselwirkung entsteht, kann durch eine Verringerung des Luftspaltes auf 1 bis 2 mm durch Präzisionsbearbeitung des Stators 19 die Lagersteifigkeit und damit die Lagegenauigkeit des Rotors bei allen Drehzahlen weiter erhöht werden.

In Figur 3a und der nachfolgenden Figur 3b kennzeichnet jeweils ein Pfeil C die radiale, kristallographische Vorzugs-C-Richtung (Textur im Stator) in der Weise, dass die stromführenden kristallographischen AB-Ebenen in der Zylinderwandung liegen, damit besonders hohe Abschirmströme bzw. magnetische Kräfte erzielt werden.

Zwischen den ringförmigen Permanentmagneten werden so die hochpermeablen Scheiben 16 mit einer Dicke im Bereich von 1 bis 2 mm zur Führung des Magnetflusses derart eingebaut, dass der magnetische Fluss über den Spalt zwischen Stator und Rotor senkrecht in die Statorleiterwandung eintritt. Gemäß Figur 3b tritt aufgrund des Einsatzes der hochpermeablen Scheiben 16 zwischen den Permanentmagneten 6, 7, 8, 9 bzw. 11 bis 14 der magnetische Fluss praktisch senkrecht in die Innenwand 23 des Stators 19 bzw. 20 ein, so dass eine radiale Ausrichtung der Permanentmagnete der Antriebswelle 2 des Rotors zusammen mit einer hochstabilen magnetischen Wechselwirkung entsteht, wobei durch Verringerung des Luftspaltes zwischen den Permanentmagneten der Antriebswelle 2 (Rotor 1) und Stator 19 bzw. 20 auf 1 bis 2 mm durch Präzisionsbearbeitung des Stators die Lagerfähigkeit und damit die Lagegenauigkeit des Rotors bei allen Drehzahlen weiter erhöht werden kann.

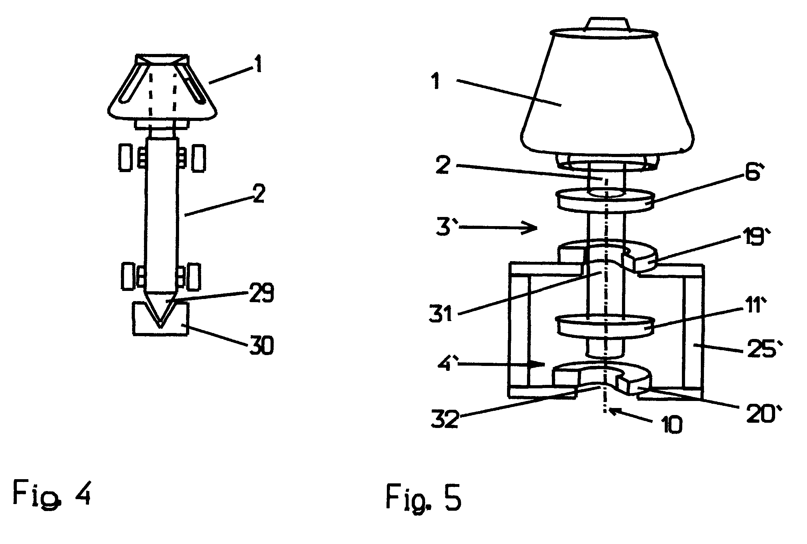

Figur 4 zeigt schematisch einen Längsschnitt durch Rotor 1 und Antriebswelle 2, wobei sich das untere Ende 29 der Antriebswelle 2 in einem Lager 30 mit Notlaufeigenschaften befindet. Eine solche Anordnung ist insbesondere für einen unwuchtigen Rotor infolge ungleichmäßiger Beladung während des Anlaufvorganges von Interesse. Das Notlauflager 30 tritt dabei nur in der Anfangsphase des Zentrifugiervorganges in Aktion, während sich die Antriebswelle 2 während des normalen Rotorlaufes im Zentrifugiervorgang geringfügig aus dem Notlauflager 30 heraushebt, so dass eine berührungsfreie Führung der Antriebswelle 2 möglich ist.

Gemäß Figur 5 ist Rotor 1 am oberen Ende eine entlang einer vertikalen Achse 10 verlaufenden Antriebswelle 2 befestigt, wobei entlang der Antriebswelle zwei Magnetlager 3', 4' vorgesehen sind, die jeweils einen mit der Antriebswelle 2 fest verbundenen Permanentmagneten 6', 11' aufweisen. Die Antriebswelle 2 ist senkrecht zu ihrer Rotations-Achse 10 in ein Gehäuse 25' einführbar, welches jeweils mit einem supraleitenden Magnet-Stator entlang der Achse 10 versehen ist, wobei die beiden Magnet-Statoren 19', 20' jeweils eine sektorförmige Öffnung bzw. Spalt 31, 32 zur seitlichen Einführung der Antriebswelle 2 aufweisen. Die supraleitenden Magnet-Statoren 19', 20' werden mit Hilfe einer ähnlichen Kühlvorrichtung, wie sie bereits anhand der Figur 2 beschrieben ist, gekühlt. Es ist jedoch auch möglich, hier zur Kühlung die Verdampfungswärme eines Kühlmittels mit niedrigem Siedepunkt, wie z.B. Stickstoff, einzusetzen. Die Abstände der Permanentmagnete 6', 11' entsprechen dem Abstand der supraleitenden Magnet-Statoren 19', 20', wobei nach Einbringen der Antriebswelle 2 das Gehäuse 25' durch Schließen eines hier nicht dargestellten zweiten Gehäuseteiles so arretiert wird, dass die Antriebswelle 2 auch bei unwirksamer Magnetlagerung in einer reibungsarmen Führung weiterläuft. Zur Verbesserung der Notlaufeigenschaften ist weiterhin am unteren Ende der Antriebswelle 2 ein Lager vorgesehen, wie es beispielsweise aus der Beschreibung zu Figur 4 bekannt ist.

In Figur 6 ist ein Rotor mit einem sogenannten Außenläufer dargestellt, wobei Rotor 1' an seinem unteren Ende mit einem Hohlzylinder 34 versehen ist, der auf seiner Innenseite wenigstens einen ring- oder zylinderförmigen Permanentmagneten 35 aufweist; der hohlzylindrisch - ausgebildete Permanentmagnet 35 umgibt einen entlang der Rotor-Achse 10 angeordneten supraleitenden Magnet-Stator 36, welcher mit an seinem oberen Ende 37 in ein mechanisches Notlauflager 38 des Rotors 1' hineinragt. Dabei weist ein Kühlfinger einen entlang der Rotor-achse nach oben verlaufenden Bolzen 41 aus einem Werkstoff hoher linearer Wärmeausdehnung - vorzugsweise aus Aluminium und Stahl - für das Notlauflager auf; durch die vom Supraleiter ausgehende Abkühlung zieht sich der Bolzen 41 aus dem Notlager zurück, sobald der Supraleiter den Rotor magnetisch fixiert hat. An der Außenperipherie von Hohlzylinder 34 befindet sich eine Läuferstruktur, die zum kontaktlosen Antrieb nach dem Prinzip der Induktionsmaschine vorgesehen ist, wobei der Stator der Induktionsmaschine mit Ziffer 40 bezeichnet ist. Die eigentliche Kühlvorrichtung 28 ist zwecks besserer Übersicht nicht dargestellt, sie entspricht jedoch im wesentlichen der anhand in Figur 2 erläuterten Vorrichtung.

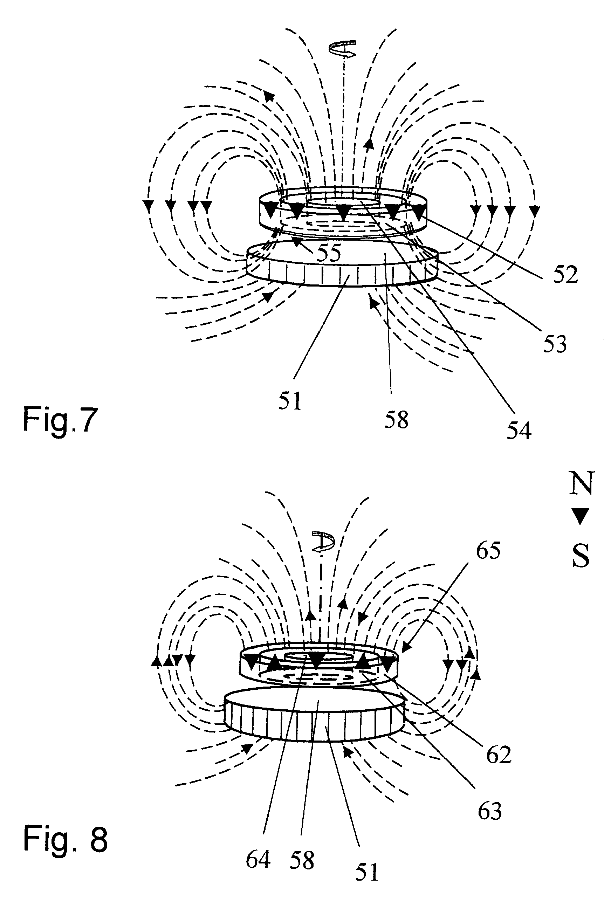

Gemäß Figur 7 weist der Stator der Zentrifuge einen scheibenförmigen supraleitenden Magnet-Stator 51 auf, der mit einer Kühlvorrichtung innerhalb des Zentrifugengehäuses verbunden ist. Oberhalb des supraleitenden Magnet-Stators 51 ist eine Permanentmagnet-Konfiguration aus drei ineinander gefügten ringförmigen Permanentmagneten 52, 53, 54 dargestellt, welche zueinander koaxial und koplanar angeordnet sind, wobei ihre Magnetisierung axial zur Rotor-Achse verläuft. Die Oberkanten der jeweiligen Permanentmagnete sind jeweils gleichpolig magnetisiert, so dass beispielsweise an der Oberkante stets der Nordpol und an der Unterseite stets der Südpol vorherrscht. Die Permanentmagnet-Konfiguration 55 bildet einen integralen Bestandteil der Unterseite des hier nur schematisch angedeuteten Rotor-Gehäuses. Wie anhand Figur 7 erkennbar ist, treten die Feldlinien in gleichsinniger Richtung aus der Permanentmagnet-Konfiguration in Richtung des Magnet-Stators aus, wobei dessen scheibenförmige Oberfläche 58 durch die Feldlinien nahezu senkrecht geschnitten wird.

In Figur 8 ist eine ähnliche Ausführungsform wie in Figur 7 dargestellt, wobei jedoch hier die axial-magnetisierten ringförmigen Permanentmagnete 62, 63, 64 mit ihren Oberkanten jeweils gegenpolig polarisiert sind, so dass beispielsweise Permanentmagnet 62 einen Nordpol, der dazu benachbarte Permanentmagnet 63 einen Südpol und der hierzu wiederum benachbarte Permanentmagnet 64 einen Nordpol an seiner Oberkante aufweist. Die somit gegenläufig von der Permanent-Konfiguration 65 ausgehenden Feldlinie schneiden die Oberflächen 58 des Magnet-Stators 51 ebenfalls nahezu in einem senkrechten Winkel. Auch hier ist das Rotor-Gehäuse nur schematisch angedeutet, wobei die konzentrisch und koplanar angeordneten ringförmigen Permanentmagnete im Bereich der Unterseite des Rotor-Gehäuses angeordnet sind.

Es ist jedoch auch möglich, in den Ausgestaltungen gemäß Figur 7 und 8 eine Permanentmagnet-Konfiguration zu bilden, die gegenüber dem Rotor-Gehäuse abtrennbar bzw. lösbar angeordnet ist.

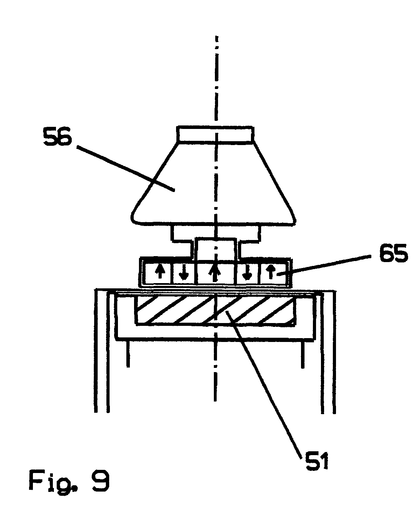

Figur 9 zeigt schematisch im Längsschnitt eine Rotoranordnung mit einer Magnetlager-Konfiguration gemäß Figur 8, wonach die ringförmigen Permanentmagnet-Konfiguration 65 mit der Unterseite des Rotorgehäuses 56 verbunden ist. Unterhalb der Permanentmagnet-Konfiguration ist der Magnet-Stator 51 angeordnet.

## Patentansprüche

1. Zentrifuge mit einer zur Aufnahme von Zentrifugiergut vorgesehenen Rotoranordnung, die wenigstens ein Lager aufweist und mittels einer Antriebsvorrichtung um eine Rotor-Achse drehbar angeordnet ist, wobei auf wenigstens einen Teil der Rotoranordnung magnetische Kräfte einwirken, **dadurch gekennzeichnet, dass** die Rotoranordnung (1) wenigstens eine Permanentmagnet-Konfiguration (6, 7, 8; 9, 11, 12, 13, 14; 6', 11'; 35) aufweist, welche in einem vorgegebenen Abstand zu wenigstens einem passiven supraleitenden Magnet-Stator (19, 20; 19', 20'; 36) benachbart angeordnet ist, wobei die Permanentmagnetkonfiguration und der Magnet-Stator wenigstens ein Magnetlager bilden.

2. Zentrifuge nach Anspruch 1, **dadurch gekennzeichnet, dass** aus der Permanentkonfiguration austretende Feldlinien wenigstens näherungsweise senkrecht in wenigstens eine benachbarte Oberfläche eines Magnet-Stators eintreten.

3. Zentrifuge nach Anspruch 1 oder 2, **dadurch gekennzeichnet, dass** die Rotor-Achse bezogen auf eine horizontale Ebene einen Winkel im Bereich von 0 bis 90° einschließt.

4. Zentrifuge nach einem der Ansprüche 1 bis 3, **dadurch gekennzeichnet, dass** die Rotoranordnung wenigstens eine ring- oder zylinderförmige Permanentmagnetkonfiguration (6, 7, 8, 9, 11, 12, 13; 6', 11') aufweist, die in radialer Richtung gesehen zu wenigstens einem passiven supraleitenden Magnet-Stator (19, 20) benachbart ist.

5. Zentrifuge nach Anspruch 4, **dadurch gekennzeichnet, dass** der Stator wenigstens teilweise die Permanentmagnetkonfiguration (der Rotoranordnung) umgibt.

6. Zentrifuge nach Anspruch 4, **dadurch gekennzeichnet, dass** die Permanentmagnetkonfiguration der Rotoranordnung den Magnet-Stator umgibt.

7. Zentrifuge nach einem der Ansprüche 1 bis 3, **dadurch gekennzeichnet, dass** die Rotoranordnung wenigstens eine Permanentmagnetkonfiguration aufweist, die in axialer Richtung gesehen zu wenigstens einem passiven supraleitenden Magnet-Stator benachbart ist.

8. Zentrifuge nach Anspruch 7, **dadurch gekennzeichnet, dass** die Permanentmagnetkonfiguration auf einem entlang der Rotorachse verlaufenden, wellenförmigen Teil befestigt ist oder als Teil der Rotoranordnung entlang der Rotorachse ausgebildet ist, wobei bei mehreren Magnetlagern wenigstens ein Stator das wellenförmige Teil wenigstens teilweise umgibt.

9. Zentrifuge nach Anspruch 7, **dadurch gekennzeichnet, dass** die Permanentmagnetkonfiguration in einem hohlwellenförmigen Teil der Rotoranordnung befestigt ist oder als hohlwellenförmiger Teil der Rotoranordnung ausgebildet ist, wobei bei mehreren Magnetlagern das hohlwellenförmige Teil wenigstens einen Stator umgibt.

10. Zentrifuge nach den Ansprüchen 4 bis 9, **dadurch gekennzeichnet, dass** die Rotoranordnung wenigstens eine Permanentkonfiguration aufweist, die in radialer Richtung gesehen zu einem Magnet-Stator benachbart angeordnet ist und wenigstens eine Permanentkonfiguration aufweist, die in axialer Richtung gesehen zu wenigstens einem Magnet-Stator benachbart angeordnet ist.

11. Zentrifuge nach einem der Ansprüche 1 bis 10, **dadurch gekennzeichnet, dass** der Magnet-Stator mit einer angeschlossenen Kühleinheit (28) versehen ist.

12. Zentrifuge nach Anspruch 11, **dadurch gekennzeichnet, dass** der Stator (19, 20; 19', 20'; 36) direkt an eine im Zentrifugengehäuse integrierte Kühleinheit (28) zwecks Kühlung des Supraleiters unter seine kritische Sprungtemperatur angeschlossen ist.

13. Zentrifuge nach Anspruch 11 oder 12, **dadurch gekennzeichnet, dass** der Stator als mindestens ein supraleitender Zylinder oder Hohlzylinder ausgebildet ist.

14. Zentrifuge nach Anspruch 13, **dadurch gekennzeichnet, dass** der Stator (19, 20; 19', 20'; 36) einen schmelztexturierten YBaCuO-Supraleiter-Werkstoff aufweist, wobei der Werkstoff unterhalb einer Temperatur von T_{c} = 92 K supraleitend wird.

15. Zentrifuge nach einem der Ansprüche 1 bis 14, **dadurch gekennzeichnet, dass** der Stator (19, 20; 19', 20'; 36) schmelztexturiertes polykristallines Material zur Erzeugung von Dämpfungseigenschaften des Magnetlagers aufweist.

16. Zentrifuge nach Anspruch 15, **dadurch gekennzeichnet, dass** der Stator Dämpfungsringe aus Kupfer, Aluminium oder deren Basislegierungen aufweist.

17. Zentrifuge nach Anspruch 16, **dadurch gekennzeichnet, dass** die Dämpfungsringe zwischen den Supraleitern eines Stators angeordnet oder in die Supraleiter eingelassen sind.

18. Zentrifuge nach einem der Ansprüche 1 bis 17, **dadurch gekennzeichnet, dass** der supraleitende Stator (19, 20; 19', 20') von der Rotorachse aus gesehen wenigstens zum Teil als Hohl-Zylinder oder Ring ausgebildet ist und der wenigstens eine Stator wenigstens eine Segment- oder Sektor-Öffnung aufweist.

19. Zentrifuge nach einem der Ansprüche 1 bis 18, **dadurch gekennzeichnet, dass** die Permanentmagnetkonfiguration (6, 7, 8; 9, 11, 12, 13, 14; 6', 11'; 35) ring- oder zylinderförmig ausgebildet ist und koaxial zur Rotor-Achse (10) angeordnet ist.

20. Zentrifuge nach einem der Ansprüche 1 bis 19, **dadurch gekennzeichnet, dass** die Permanentmagnetkonfiguration als ein ring- oder zylinderförmiger Permanentmagnet oder eine Gruppe aus koaxialen Ringen oder Hohlzylindern ausgebildet ist, die direkt oder mit einem anderen Material als Zwischenlage radial ineinander und/oder axial aneinander gefügt sind.

21. Zentrifuge nach einem der Ansprüche 1 bis 6, **dadurch gekennzeichnet, dass** die Permanentmagnetkonfiguration aus axial magnetisierten Ringen aufgebaut ist, die in axialer Richtung gestapelt sind, wobei gleiche Pole aufeinander liegen und eine hohe lokale Flussdichte in radialer Richtung erzeugen.

22. Zentrifuge nach einem der Ansprüche 1 bis 20, **dadurch gekennzeichnet, dass** die Permanentkonfiguration wenigstens zwei ringförmige Permanentmagnete aufweist, die konzentrisch in einer Ebene angeordnet sind, wobei der Innen-Umfang eines äußeren Ringes den Außen-Umfang eines inneren Ringes berührt.

23. Zentrifuge nach Anspruch 20 oder 22, **dadurch gekennzeichnet, dass** die ineinander gefügten Permanentmagnetringe in radialer Richtung gesehen eine gleiche oder alternierende axiale Magnetisierung aufweisen.

24. Zentrifuge nach einem der Ansprüche 1 bis 23, **dadurch gekennzeichnet, dass** die Permanentkonfiguration als Unterteil eines Rotorbechers ausgebildet ist.

25. Zentrifuge nach einem der Ansprüche 1 bis 24, **dadurch gekennzeichnet, dass** die Permanentmagnetkonfiguration nur aus einem einzigen ring- oder zylinderförmigen Permanentmagneten besteht.
